# EUROPEAN PATENT SPECIFICATION

(11) **EP 3 698 300 B1**
(45) Date of publication and mention of the grant of the patent: **02.12.2026**
(21) Application number: 17784962.7
(22) Date of filing: 18.10.2017
(51) Int. Cl.: G06Q 10/08

(54) **METHOD AND SYSTEM FOR CELLULAR-BASED SHIPMENT TRACKING**
VERFAHREN UND SYSTEM ZUR MOBILFUNK-BASIERTEN VERSANDVERFOLGUNG
PROCÉDÉ ET SYSTÈME DE SUIVI D'EXPÉDITION BASÉ SUR RADIO MOBILE

(43) Date of publication of application: 26.08.2020
(73) Proprietor: Telefonaktiebolaget LM Ericsson (PUBL), 164 83 Stockholm (SE)
(72) Inventor: KARAPANTELAKIS, Athanasios, 19002 Athens (GR); LI, Qiang, 164 80 Stockholm (SE); VULGARAKIS FELJAN, Aneta, 112 16 Stockholm (SE); TESLENKO, Maxim, 192 74 Sollentuna (SE); PRATAP SIRCAR, Rana, Gurgaon, 122003 (IN); MOKRUSHIN, Leonid, 754 58 Uppsala (SE)
(74) Representative: Ericsson
(86) International application number: PCT/EP2017/076571
(87) International publication number: WO 2019/076448

(56) References cited:
- EP-A1- 1 937 015
- EP-A1- 2 114 063
- EP-A1- 2 547 130
- WO-A1-2014/006643
- US-B1- 7 974 637
- MOE RAHNEMA: "OVERVIEW OF THE GSM SYSTEM AND PROTOCOL ARCHITECTURE", IEEE COMMUNICATIONS MAGAZINE, IEEE SERVICE CENTER, PISCATAWAY, US, vol. 31, no. 4, 1 April 1993 (1993-04-01), pages 92 - 100, XP000359829, ISSN: 0163-6804, DOI: 10.1109/35.210402

## Description

### TECHNICAL FIELD

Embodiments of the subject matter disclosed herein generally relate to methods and network devices for tracking shipments using cellular networks.

### BACKGROUND

Localizing shipments has developed in response to customers' desire to track their goods and to predict their delivery. When a shipment includes quickly perishable goods (such as agricultural products and pharmaceuticals) transit time and route may be critical for product quality. Well-known methods of tracking rely on labels attached to the shipment and scanned automatically or manually during loading, sorting, warehousing and delivery. The labels may be numeric, alpha-numeric, 1D or 2D barcodes. Using an interface to a tracking information repository, customers are often able to find out when a shipment of known identity was scanned at departure, arrival or other predetermined locations along a route. However, it is not possible to know where the shipment is in between these locations, particularly if detours from a predetermined route occur.

The conventional end-to-end tracking of goods, from their source to their destination, requires special infrastructure and/or human involvement. For example, in courier services, a package is assigned an identity number, identified by a Quick Response (QR) code, and is scanned at every transit point physically, either by humans or machines. The scans trigger sending information about the package (e.g., location and time of scan) to a central repository. The information stored in the central repository is accessible using the appropriate application program interface (API).

In addition to logistical limitations (i.e., not knowing where the shipment is when a long time passes from a previous scan, or a detour has occurred), conventional tracking methods are costly both in terms of equipment and labor.

In view of the above-identified problems of conventional tracking, it has become apparent that improvements are desirable to overcome drawbacks and lower costs.

US 7974637 B1 discloses a system for tracking objects using cellular network infrastructure, including methods for location determination and data transmission in mobile communication networks. EP 2114063 A1 relates to network attachment procedures and mobility management in cellular networks, describing protocols for device registration and network access control. MOE RAHNEMA: "Overview of The GSM System And Protocol Architecture", IEEE COMMUNICATIONS MAGAZINE, IEEE SERVICE CENTER, PISCATAWAY, US, vol. 31, no. 4, 1 April 1993 (1993-04-01), pages 92-100, provides an overview of GSM system architecture and protocol implementation, including network attachment mechanisms and cellular communication protocols. [0007] EP 2547130 A1 describes secure communication methods in mobile networks, including authentication procedures and network security protocols for mobile devices. EP 1937015 A1 discloses methods for managing mobile device identities and subscriber information in cellular networks, including IMSI-based authentication systems.

### SUMMARY

In order to avoid problems of conventional tracking methods and lower costs, various embodiments implement shipment tracking using cellular network infrastructure. Radio modules, which may be simple, cheap and reusable, are attached to shipments and programmed to attempt at times to attach to the local cellular network using network-type identifiers, such as dummy International Mobile Subscriber Identity (IMSI). If a network-type identifier in a network attachment request has been associated with a shipment identifier, the network operator logs location and time information about the shipment, thereby allowing tracking of the shipment.

Various embodiments of the invention are defined in the appended set of claims.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 illustrates the tracking mechanism in one embodiment;
Figure 2 is a flowchart of a tracking method according to an embodiment;
Figure 3 is a schematic diagram of a device able to perform a tracking method according to an embodiment;
Figure 4 is a block diagram of an apparatus able to perform a tracking method according to another embodiment;
Figure 5 illustrates a blockchain used in some embodiments to store shipment location information;
Figure 6 illustrates a scenario for creating a shipment location record according to an embodiment;
Figure 7 is a flowchart corresponding to the scenario in Figure 6;
Figure 8 illustrates a chord ring-inspired distributed hash table used in some embodiments to store shipment location information;
Figure 9 is a flowchart of a method for enabling tracking using wireless infrastructure according to an embodiment;
Figure 10 is a block diagram of a device able to perform the method in Figure 8 according to another embodiment;
Figure 11 is a flowchart of a method for providing tracking information according to an embodiment;
Figure 12 is a block diagram of a device able to perform the method in Figure 11 according to another embodiment; and
Figure 13 illustrates a scenario for providing tracking information according to an embodiment.

### DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. The embodiments are described in the context of a wireless cellular network, but plural network operators may cooperate. The described functionality may be executed in a cloud environment.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, particular features, structures or functions may be combined in any suitable manner in one or more embodiments.

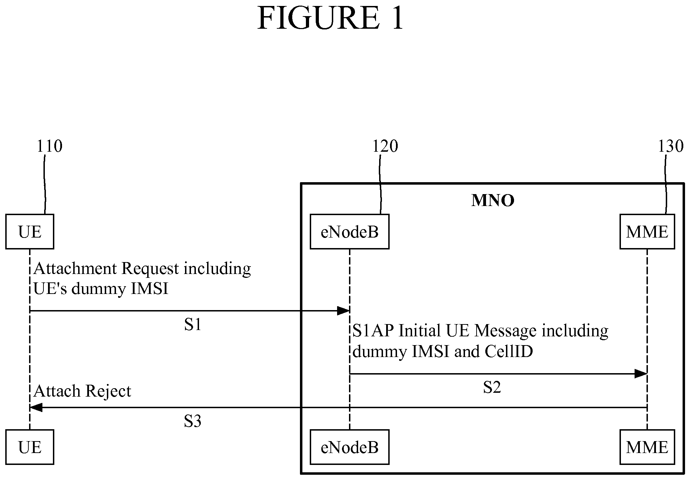

Figure 1 illustrates the tracking mechanism implemented in the embodiments described later in this section. Before being sent from a source or origin location, every shipment (which may be as small as a single pocket-size packet or as big as a shipping container) has a radio module 110 attached so as not to separate from one another before arriving at the destination. When the radio module is attached to the shipment, information on the dummy IMSI being associated with a shipment identifier is supplied to the network operator. The network operator may store this type of information in a dedicated database on one of the network's core devices. The information may be shared with other network operators, enabling the tracking to operate across networks.

Radio module 110, which is labeled User Equipment (UE) in Figure 1, may be as simple as a cellular module with an antenna, a power supply and a processing unit, and may be packed inside or fastened to the shipment. The radio module is turned ON and programmed to attempt attaching to cellular networks using a mock International Mobile Subscriber Identity, IMSI (hereinafter called "dummy IMSI"). IMSI is a 15-digit identity of a mobile subscription and is unique globally. IMSIs are used for global network service subscriptions. The dummy IMSI may be stored in either a mock SIM (Subscriber Identity Module) card, a mock eUICC (embedded Universal Integrated Circuit Card) module or iUICC software. In this context, the term "mock" indicates that the respective functionality is emulated, but not really performed. Existing protocols provide for network attachment requests that include IMSIs. For example, since the dummy IMSI stored in a mock SIM card is not registered, although network attachment is requested, attachment is not expected.

The tracking mechanism works if either the attachment request is rejected or accepted. However, the use of dummy IMSIs which are not registered and do not result in attachment is favorable because resources are saved both for the network operator (i.e., does not allocate bandwidth to the radio module) and for the radio module (which can operate in a low power state between attachment request submissions). Moreover, one of the advantages of the embodiments described in this section is that they use existing framework, such as protocols for wireless devices' attachment to networks, with minimal burden and changes.

At S1, radio module 110 sends an attachment request to a base station 120 (nodeB in 3G and eNodeB in 4G/LTE networks) that provides cellular network service in the area where the radio module 110 (and therefore also the shipment) is located at that moment. The use of standard terminology (e.g., UE or eNodeB) is this description is exemplary and not intended to be limiting. Base station 110 initiates determining whether the dummy IMSI included in the attachment request is associated with a shipment identifier at S2. Exemplarily, the base station sends a message to a Mobility Management Entity, MME, 130. The message, which includes the dummy IMSI, may be the type of already-existing message that would initiate connection if the dummy IMSI were registered to qualify the radio module to use network services. Base station 120 and MME 130 pertain to the same mobile network operator, MNO. In fact, MME indicates a functional module that may be executed on a same physical device as the base station function, on a device collocated with the base station, or on a device at a different location than the base station. The MME functionality is, in fact, not required for performing the tracking-related operations, but modifying the MME module to include these operations is minimally disruptive and efficient. For example, as already mentioned, an already-existing type of message may be used.

The MME 130 determines whether the dummy IMSI is associated with a shipment identifier. For example, a database storing dummy IMSIs and associated shipment identifiers is accessed. If the dummy IMSI is not registered, the attachment request is rejected as illustrated by S3. Presence of S3 is optional from the point of view of performing the tracking-related operations (e.g., absent S3, the radio module may wait a predetermined time to switch to a lower power mode). The radio module waits a predetermined period or until a predetermined moment to send another attachment request.

Upon receiving the indication that its attachment request was rejected, the radio module may transit to a low power mode to conserve its power supply's energy. Regular time intervals between successive radio attachment attempts may be programmed in the radio module. Depending on expected average speed of the shipment, the interval may vary, for example, between an hour and a day. As an alternative or additional, the radio module may be programmed to send network attachment requests at predetermined moments in a list.

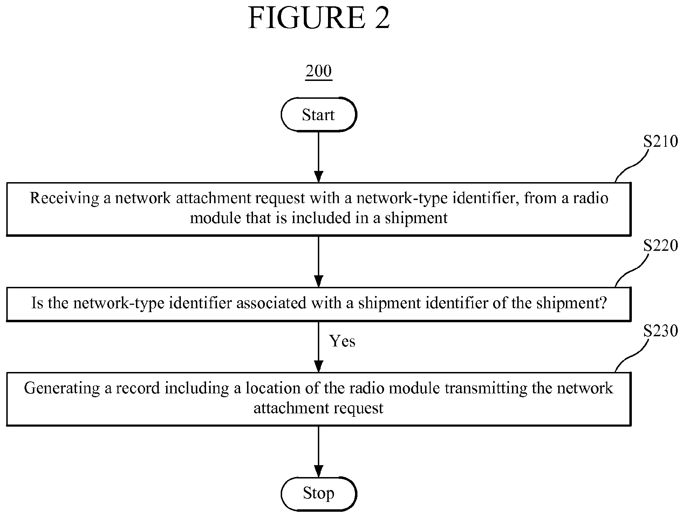

Figure 2 is a flowchart of a tracking method 200 performed by a mobile network operator (e.g., base station 120 and/or MME 130) for tracking a shipment. Method 200 includes receiving a network attachment request with a network-type identifier from a radio module (e.g., 110) that is included in a shipment, at S210. At S220, it is determined whether the network-type identifier is associated with a shipment identifier. In describing the tracking mechanism based on Figure 1, steps S210 and S220 appear to be performed by different physical devices but, as already discussed this is not required. Method 200 then includes, at S230, generating a record including a location of the shipment at the moment at which the radio module has transmitted the network attachment request, if determined that the network-type identifier is associated with the shipment identifier.

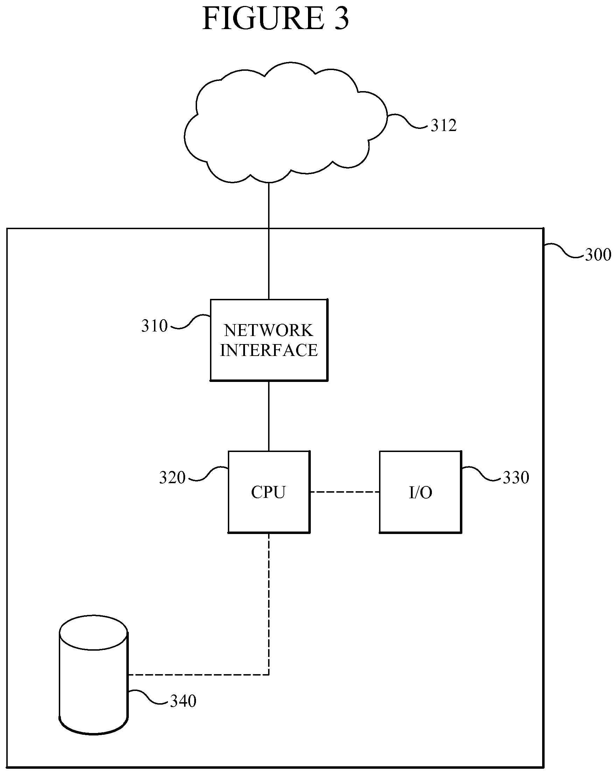

Figures 3 is a schematic diagram of a device 300 able to perform tracking methods such as method 200. Device 300 includes a network interface 310 enabling radio communication with other devices within a wireless network 312, and a data processing unit 320. The device may also include a user interface 330 that would enable interaction with an operator, and a memory 340 for storing information and software.

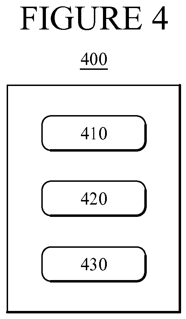

In another embodiment illustrated in Figure 4, an apparatus 400 includes hardware and software modules for shipment tracking. Apparatus 400 includes a receiver 410 configured to receive a network attachment request with a network-type identifier from a radio module included in a shipment. Apparatus 400 further includes a processing module configured to determine whether the network-type identifier is associated with a shipment identifier. If determined that such association is active, a location information storing module 430 generates and stores a record including information about location of the shipment when the radio module has transmitted the network attachment request.

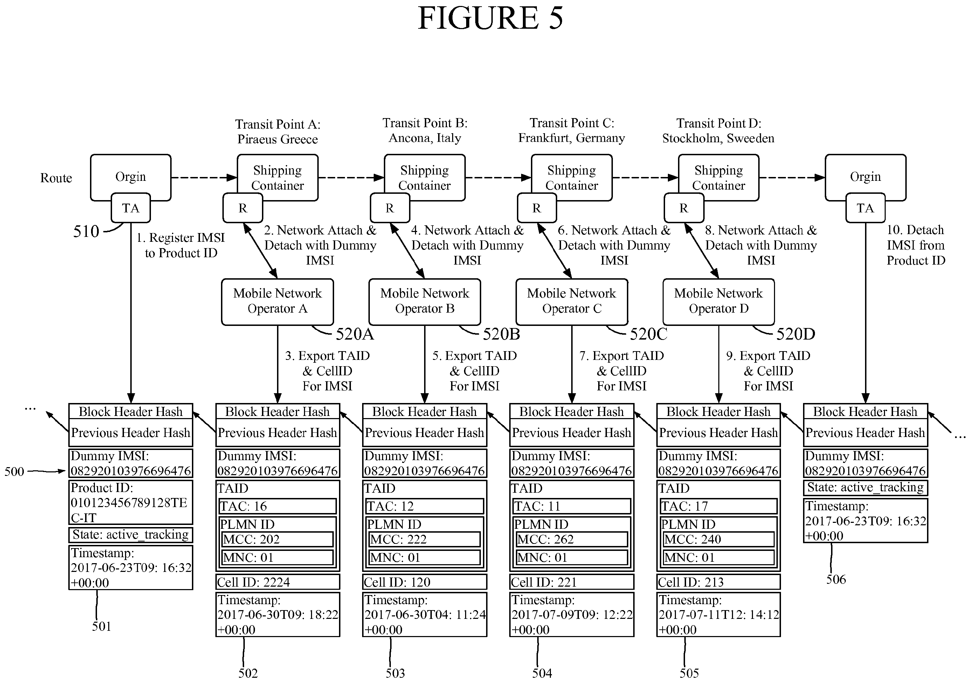

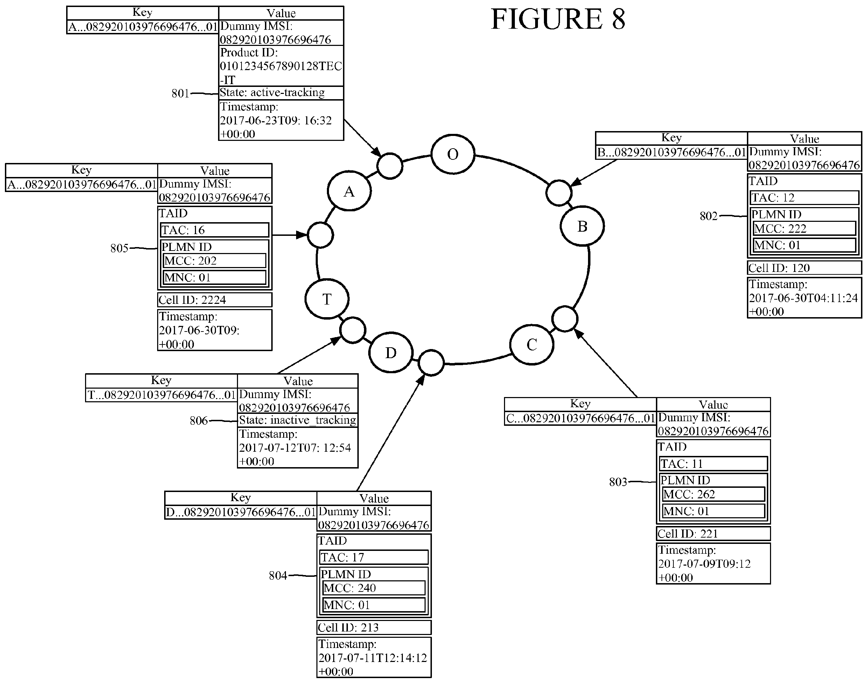

Embodiments of the data structures used for storing and retrieving shipment location information are illustrated in Figures 5 and 8. Figure 5 illustrates a blockchain 500 used for tracking a shipment container with a radio module R along a route from origin to destination. At the origin, when the radio module is attached to the shipment container, a transit authority, TA, registers with the network the pair made of the radio module's IMSI and a shipment identifier.

The shipment identifier may be a product ID (such as, a Global Trade Item Number, GTIN), a Vehicle Identification Number (VIN), Stockkeeping Unit (SKU), European Article Number (EAN), Japanese Article Number (JAN), International Standard Block Number (ISBN), Manufacturer Part Number (MPN) uniquely related to the shipment content, or an International Mobile Equipment Identity unique to the radio module. This list of potential shipment identifiers is not exhaustive or limiting. In Figure 5, the blockchain's initial record 501 stores the dummy IMSI, the product ID (serving as shipment identifier) and a state indicator together with a timestamp corresponding to the date and time, when the network was informed by the association of the dummy IMSI with the product ID. The term "timestamp" refers to a digital record of date and time attributes of occurrence of an event.

At different predetermined times along the route, the radio module R attempts to attach to the network using the Dummy IMSI. The base stations 520A-D receiving these attachment requests serve different cells. The blockchain is augmented by adding a record each time the radio module sends a network attachment request. Such a record (e.g., 502-505) indicates the location of the shipment container when the radio module has transmitted the network attachment request.

In a non-limiting embodiment, blockchain records 501-505 illustrated in Figure 5 store location information using tracking area identifiers (TAID) and cell identifiers (CelllDs) corresponding to the areas where the radio module was located when sending the network attachment requests. This TAID/CellID includes a Tracking Area Code (TAC), a Public Land Mobile Network Identity (PLMNID) and the cell identifier.

The PLMNID includes a three-digit mobile country code (MCC) and a two-digit mobile network code (MNC). The MCC and MNC values in 502-505 indicate that the shipment container traveled through different countries, but attempted to connect to the same network (e.g., Vodaphone).

TAC identifies a tracking area within a mobile network, and it is established by the mobile network operator. Such tracking area may cover a set of cells, e.g., it may indicate a neighborhood or a city borough. The CellID uniquely corresponds to a cell.

In another embodiment, records indicate the shipment's locations as geographical coordinates (e.g., latitude, longitude and maybe an area around these coordinates).

Records 501-506 also include timestamps pin-pointing the moments when the network attachment requests were received.

Once the shipment reaches the destination, the radio module R is separated from the shipment, and another transit authority sends a message indicating that the dummy IMSI is no longer attached to the product ID. It is reasonable to assume that transit authority devices performing such are located at shipment and destination locations. Blockchain 500 ends with a record 506 indicating that the dummy IMSI is no longer active and a timestamp.

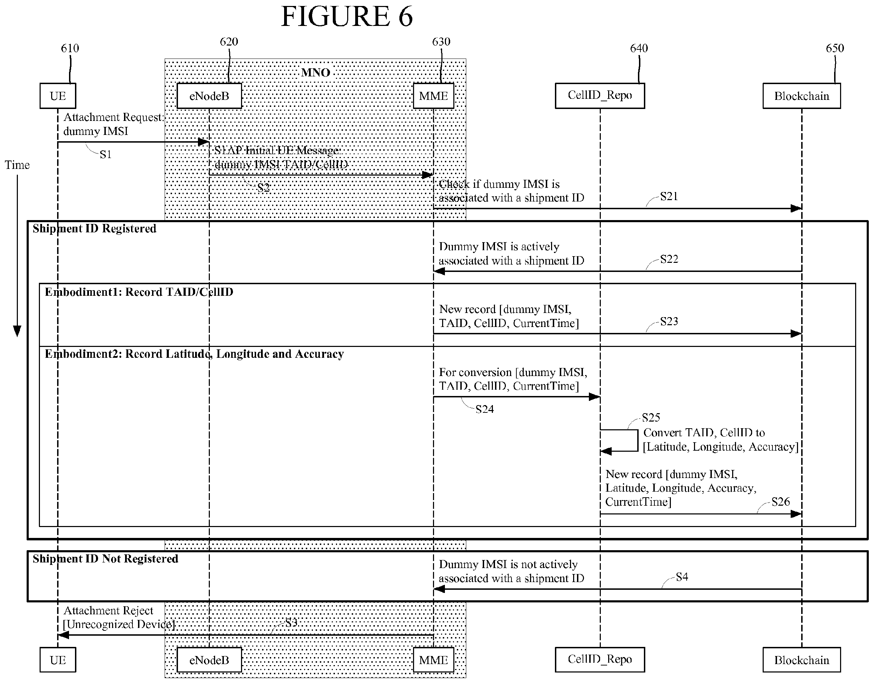

For a tracking method using a blockchain, Figure 6 illustrates in detail a scenario for creating a shipment location record. As in Figure 1, a radio module 610 sends a network attachment request at S1, the base station 620 forwards the dummy IMSI included in the request with network node-related information (PLMNID, TAC and CellID) to MME 630 at S2, and MME 630 rejects the attachment request at S3. The attachment request may be already implemented according to mobile network standards (e.g., LTE), the dummy IMSI standing for the EPS mobility identity.

Further, at S21, MME sends a message including the dummy IMSI to an information repository 650 to check whether the dummy IMSI is actively associated with a shipment ID (e.g., there is a blockchain whose initial record indicates this association as being active and no final record). If the information repository 650 replies that indeed there is an active blockchain for the dummy IMSI (i.e., the dummy IMSI is currently associated with a shipment ID or the shipment identity is registered) at S22, in a first embodiment, the MME 630 sends a message including the network node-related information for locating the shipment to the information repository at S23. In a second embodiment, the MME 630 sends a message including the network node-related information to a location conversion module 640 at S24. Module 640 is configured to convert the network node-related information into geographical coordinates at S25, and then to forward these coordinates with a timestamp to the information repository 650, at S26.

For both embodiments, information repository 650 then adds a record to the blockchain based on the received location information. However, information repository 650 may reply to S21 by indicating that there is no active blockchain for the dummy IMSI at S4. Note that module 640 and repository 650 may be executed on devices outside the mobile network's core.

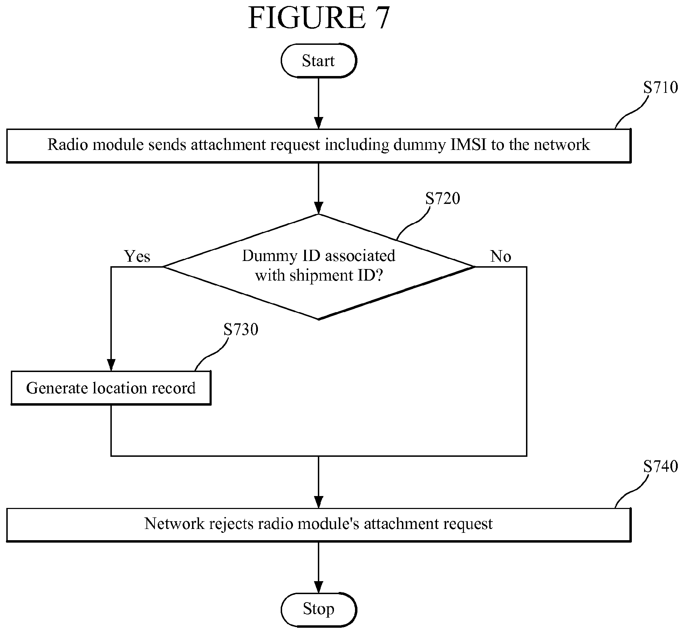

In order to ease understanding of the scenario in Figure 6, a flowchart thereof is illustrated in Figure 7. The first action is performed by the radio module who sends an attachment request including its dummy IMSI to the network at S710. The network determines whether the dummy ID included in the request has been associated with a Shipment ID at S720 (which includes S2 and S21). If YES, such an association is active (S22), then a location record is generated and stored at S730. The location record may contain information in network node-related information (Embodiment 1) or geographical coordinates (Embodiment 2). Regardless whether the dummy ID included in the request has been associated with a Shipment ID or not, the network rejects the radio module's attachment request at S740.

Figure 8 illustrates a chord ring-inspired distributed hash table (DHT) that may be used instead of the blockchain. The records (801-806) in this data structure include a "key" field and a "value" field. The key field stores an indicator of the type of record and common identifier for all records related to the same dummy IMSI and shipment ID pair. The type of record may be O if the record is an initial record (e.g., 801 corresponding to blockchain's initial record 501), A-D for records along the route between origin and destination (e.g., 802-805 corresponding to blockchain's records 502-505), and T if the record is a final record added at the destination (e.g., 806 corresponding to blockchain's final record 506). The value fields of records 802-805 include location information similar to the blockchain's records 502-505. Similar with the blockchain's records, the chord ring-inspired DHT's records include timestamps.

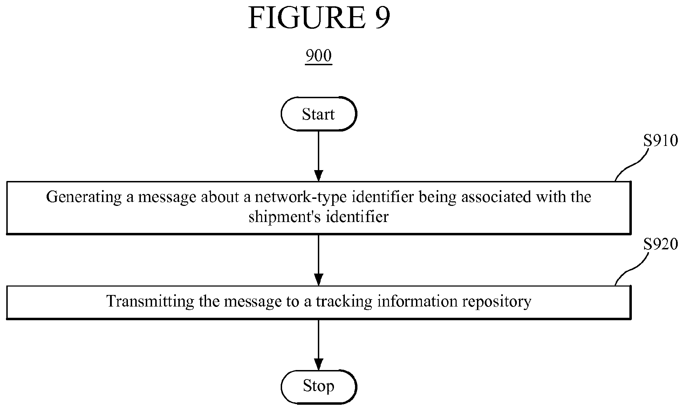

As already mentioned, in order to perform tracking using a wireless mobile network, a transit authority device has to be present at least at the location where shipping initiates. The transit authority controlling this kind of device attaches the activated radio module to the shipment and ships them to the destination. The radio module is activated when turned ON and programmed to send attachment requests using its IMSI. Figure 9 illustrates a method 900 performed by a transit authority device. Method 900 includes generating a message about a network-type identifier being associated with the shipment's identifier at S910, and transmitting the message to a tracking information repository at S920. The message may trigger, for example, initiation of a blockchain. The same transit authority device may send a message to cause ending the blockchain when the shipment has reached its destination, where the transit authority is located. However, some embodiments may provide a blockchain be closed when no new record occurs for a predetermined time (e.g., longer than the scheduled interval between attachments requests), or when the radio module's dummy IMSI is registered with another shipment ID.

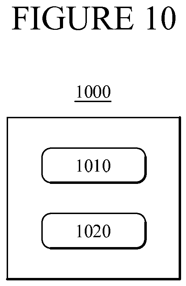

The transit authority device may have a structure similar with the structure illustrated in Figure 3 (i.e., including a network interface 310, a data processing unit 320, a user interface 330 and a memory 340). However, a transit authority device 1000 able to perform methods such as method 900 may have a modular structure as illustrated in Figure 10. Device 1000 includes a message generator module 1010 for generating tracking information repository, and a transceiver module 1020 for transmitting the message to the network.

The transit authority device or another device at a retail point or controlled by an end-consumer who is the intended recipient of goods may be used to request tracking information related to a shipment ID. Such a tracking information requestor may have read-only access to the blockchain. An application program interface is designed to present the shipment's location information to the tracking information requestor.

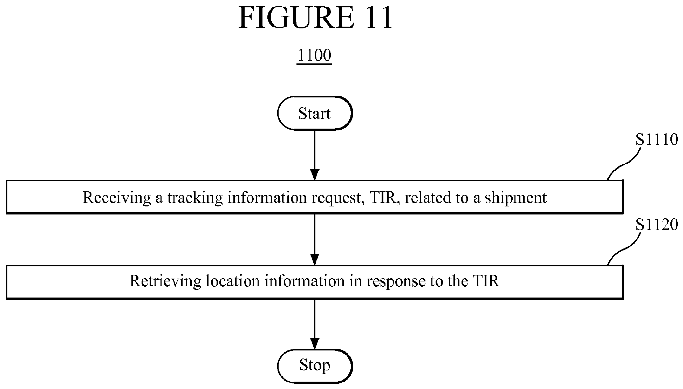

Figure 11 is a flowchart of a method 1100 performed by a network operator device tracking a shipment including a radio module according to another embodiment. Method 1100 includes receiving a tracking information request, TIR, related to the shipment at S1110, and retrieving a shipment's location information in response to the TIR. The TIR should include at least one of the shipment's identifier and the radio module's dummy IMSI. A shipment's location information may include position-time pairs along a route between a shipping location and a shipment destination. These position-time pairs may be retrieved from a blockchain or a hash table made of records generated any time a network attachment request with the network-type identifier was received by a network device. Such a blockchain may be initialized when the shipment identifier is associated with the radio module's dummy IMSI at the shipping location.

The location information may be presented as position-time pairs along a route between the shipping location and the destination of the shipment. Such the position-time pairs may be retrieved from a blockchain made of records generated any time a network attachment request with the network-type identifier was received by a network device, the blockchain having been initialized when the shipment identifier was associated with the network-type identifier at the shipping location. If a location in the position-time pairs is identified based on network node-related information provided by the network node receiving the network attachment request, the network node-related information may be converted into geographical coordinates before being provided in response to a TIR.

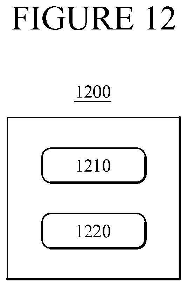

A network device (able to perform method 1100 may have a structure similar with the structure illustrated in Figure 3 (i.e., including a network interface 310, a data processing unit 320, a user interface 330 and a memory 340). However, such a device able to perform methods similar to method 1100 may have a modular structure as illustrated in Figure 12. Device 1200 includes a receiver module 1210 configured to receive a TIR related to a shipment, and a processing module 1220 configured to retrieve a shipment's location information.

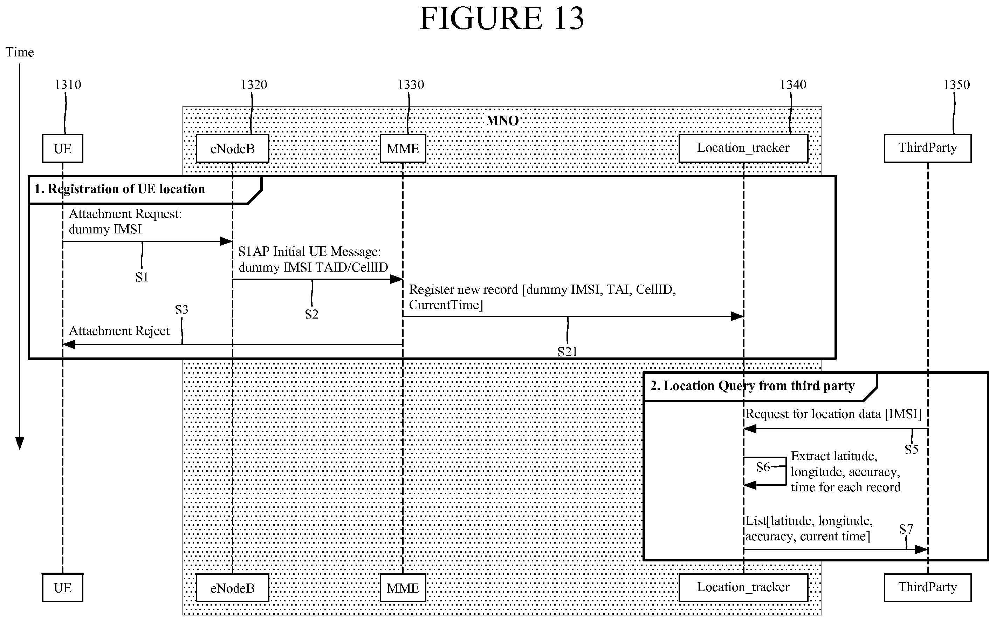

If a location in the position-time pairs is identified based on network node-related information of the network node receiving the network attachment request, method 1100 may further include converting network node-related information into geographical coordinates. Figure 6 illustrates such a conversion being performed outside the mobile network's core. In an alternative embodiment, Figure 13 illustrates a client-server scenario according to the conversion performed by a location tracker node 1340 upon receiving a TIR.

As in Figure 6, a radio module 1310 sends a network attachment request at S1, the base station 1320 forwards the dummy IMSI included in the request with network node-related information (PLMNID, TAC and CellID) to MME 1330 at S2, and MME 1330 rejects the attachment request at S3. Although not shown in Figure 12, the dummy IMSI may not have been associated with a shipment ID.

When a location query occurs, the location tracker receiving a request for shipment's location data at S5, the location tracker converts the stored network node-related information (PLMNID, TAC and CellID) in the shipment's record into geographical coordinates at S6, and replies to the request with a list of coordinates and times at S7.

Other embodiments of the methods described in this section are computer programs with instructions that make a data processing unit carry out these methods, respectively. The executable codes of the computer programs may be stored on computer-readable recording media (e.g., memory 340).

Some of the advantages of the embodiments described in this section are that tracking using mobile networks provides a cheap solution (as cheap radio modules may be employed) that can be implemented with minimal effort and has basically ubiquitous coverage. These methods may also prevent loss of shipments. This tracking approach is especially suited for urban or semi-urban environments where Radio Base Stations are densely deployed.

The embodiments disclosed in this section provide methods and network devices for tracking shipments using existing mobile networks. This description is not intended to limit the invention. On the contrary, the exemplary embodiments are intended to cover alternatives, modifications and equivalents, which are included in the scope of the invention. Further, in the detailed description of the exemplary embodiments, numerous specific details are set forth in order to provide a comprehensive understanding of the invention. However, one skilled in the art would understand that various embodiments may be practiced without such specific details.

Although the features and elements of the present exemplary embodiments are described in the embodiments with particular combinations thereof, each feature or element can be used alone without the other features and elements of the embodiments or in various combinations with or without other features and elements disclosed herein. The methods or flowcharts provided in the present application may be implemented in a computer program, software or firmware tangibly embodied in a computer-readable storage medium for execution by a computer or a processor.

This written description uses examples of the subject matter disclosed to enable any person skilled in the art to practice the same, including making and using any devices or systems and performing any incorporated methods. The patentable scope of the subject matter is defined by the claims.

## Claims

1. A method (200) performed by a network node (120, 130, 300, 400, 520A-D, 630) for tracking shipments that include radio modules, the method comprising:
receiving (S210) a network attachment request with a network-type identifier, from a radio module (110, R) that is included in a shipment, wherein the network-type identifier comprises a dummy International Mobile Subscriber Identity, IMSI;
determining (S220) whether the network-type identifier is associated with a shipment identifier; and
generating (S230) a record indicating a location of the shipment when the radio module has transmitted the network attachment request, if determined that the network-type identifier is associated with the shipment identifier.

2. The method of claim 1, wherein the record is included in a blockchain created when the network-type identifier was associated with the shipment identifier, wherein a timestamp for the receiving of the network attachment request is included in the record.

3. The method of claim 1, wherein the record is stored in a distributed hash table initiated when the network-type identifier was associated with the shipment identifier, wherein a timestamp for the receiving of the network attachment request is included in the record.

4. The method of any of claims 1 to 3, wherein the location is identified based on network node-related information, and the method further comprises converting the network node-related information into geographical coordinates.

5. The method according to any of claims 1 to 4, further comprising:
rejecting the attachment request.

6. A network operator device (120, 130, 300, 400, 520A-D, 630), comprising:
a network interface (310) and a processing unit (320) configured to perform any of the methods recited in claims 1 to 5 for tracking a shipment including a radio module (110, R).

7. An apparatus (400) for tracking shipments that include radio modules, the apparatus comprising:
a first module (410) for receiving a network attachment request with a network-type identifier, from a radio module that is included in the shipment, wherein the network-type identifier comprises a dummy International Mobile Subscriber Identity, IMSI;
a second module (420) for determining whether the network-type identifier is associated with a shipment identifier of the shipment; and
a third module (430) for generating a record including a location of the shipment when the radio module has transmitted the network attachment request, if determined that the network-type identifier is associated with the shipment identifier.

8. The method of claim 1, further comprising:
generating (S910) a message about the network-type identifier being associated with the shipment identifier; and
transmitting (S920) the message to a tracking information repository,
wherein the radio module (110, R) included in the shipment is configured to submit one or more requests to attach to a radio network using the network-type identifier.

9. The method of claim 8, wherein the network-type identifier is an International Mobile Subscriber Identity, IMSI, and/or the shipment identifier includes a Global Trade Item Number, GTIN, a Vehicle Identification Number or an International Mobile Equipment Identity of the radio module, the method further comprising generating another message to signal that the network-type identifier is no longer associated with the shipment identifier after the shipment has reached its destination.

10. A transit authority device (510, 300), comprising:
a network interface (310) and a processing unit (320) configured to perform any of the methods recited in claims 8 to 9 for tracking shipment that include radio modules.

11. The apparatus of claim 7, further comprising:
a fourth module (1010) for generating a message about the network-type identifier being associated with the shipment identifier; and
a fifth module (1020) for transmitting the message to a radio network device.

12. The method of claim 1, further comprising:
receiving (S1110) a tracking information request, **TIR,** related to the shipment; and
retrieving (S1120) location information in response to the **TIR,**
wherein the **TIR** includes at least one of the shipment identifier and the network-type identifier associated with the shipment identifier.

13. The method of claim 12, wherein the location information includes position-time pairs along a route between a shipping location and a destination of the shipment.

14. The method of claim 13, wherein the position-time pairs are retrieved from a blockchain made of records generated any time a network attachment request with the network-type identifier was received by a network device, wherein the blockchain was initialized when the shipment identifier was associated with the network-type identifier at the shipping location,
wherein the blockchain is ends with a record indicating that the network-type identifier is no longer associated with the shipment identifier.

15. The method of any of the claims 13 to 14, the method further comprises:
if a location in the position-time pairs is identified based on network node-related information of a network node receiving the network attachment request, converting network node-related information into geographical coordinates.

16. The network operator device of claim 6, wherein the processing unit is further configured to:
receive a tracking information request, TIR, related to the shipment; and retrieve location information in response to the TIR, wherein the TIR includes at least one of the shipment identifier and the network-type identifier associated with the shipment identifier.

17. The network operator device of claim 6, further comprising:
a first module (1210) for receiving a tracking information request, TIR, related to the shipment; and
a second module (1220) for retrieving location information in response to the TIR,
wherein the TIR includes at least one of the shipment identifier and the network-type identifier associated with the shipment identifier.

## Patentansprüche

1. Verfahren (200), das von einem Netzwerkknoten (120, 130, 300, 400, 520A-D, 630) durchgeführt wird, zur Verfolgung von Sendungen, die Funkmodule umfassen, wobei das Verfahren Folgendes umfasst:
Empfangen (S210) einer Netzwerkanschlussanforderung mit einer Netzwerktypkennung von einem Funkmodul (110, R), das in einer Sendung umfasst ist, wobei die Netzwerktypkennung eine internationale Dummy-Mobilteilnehmeridentität, IMSI, umfasst;
Bestimmen (S220), ob die Netzwerktypkennung mit einer Versandkennung assoziiert ist; und
Generieren (S230) eines Datensatzes, der einen Standort der Sendung angibt, wenn das Funkmodul die Netzwerkanschlussanforderung gesendet hat, falls bestimmt wird, dass die Netzwerktypkennung mit der Versandkennung assoziiert ist.

2. Verfahren nach Anspruch 1, wobei der Datensatz in einer Blockchain umfasst ist, die erstellt wurde, als die Netzwerktypkennung mit der Versandkennung assoziiert wurde, wobei ein Zeitstempel für das Empfangen der Netzwerkanschlussanforderung in dem Datensatz umfasst ist.

3. Verfahren nach Anspruch 1, wobei der Datensatz in einer verteilten Hash-Tabelle gespeichert wird, die initiiert wurde, als die Netzwerktypkennung mit der Versandkennung assoziiert wurde, wobei ein Zeitstempel für das Empfangen der Netzwerkanschlussanforderung in dem Datensatz umfasst ist.

4. Verfahren nach einem der Ansprüche 1 bis 3, wobei der Standort basierend auf netzwerkknotenbezogenen Informationen identifiziert wird und das Verfahren ferner Umwandeln der netzwerkknotenbezogenen Informationen in geografische Koordinaten umfasst.

5. Verfahren nach einem der Ansprüche 1 bis 4, ferner umfassend:
Ablehnen der Anschlussanforderung.

6. Netzwerkbetreibervorrichtung (120, 130, 300, 400, 520A-D, 630), umfassend:
eine Netzwerkschnittstelle (310) und eine Verarbeitungseinheit (320), die dazu konfiguriert ist, eines der Verfahren nach Anspruch 1 bis 5 zum Verfolgen einer Sendung durchzuführen, die ein Funkmodul (110, R) umfasst.

7. Einrichtung (400) zum Verfolgen von Sendungen, die Funkmodule umfassen, wobei die Einrichtung Folgendes umfasst:
ein erstes Modul (410) zum Empfangen einer Netzwerkanschlussanforderung mit einer Netzwerktypkennung von einem Funkmodul, das in einer Sendung umfasst ist, wobei die Netzwerktypkennung eine internationale Dummy-Mobilfunkteilnehmeridentität, IMSI, umfasst;
ein zweites Modul (420) zum Bestimmen, ob die Netzwerktypkennung mit einer Versandkennung der Sendung assoziiert ist; und
ein drittes Modul (430) zum Generieren eines Datensatzes, der einen Standort der Sendung angibt, wenn das Funkmodul die Netzwerkanschlussanforderung gesendet hat, falls bestimmt wird, dass die Netzwerktypkennung mit der Versandkennung assoziiert ist.

8. Verfahren nach Anspruch 1, ferner umfassend:
Generieren (S910) einer Nachricht darüber, dass die Netzwerktypkennung mit der Versandkennung assoziiert ist; und
Senden (S920) der Nachricht an ein Verfolgungsinformationsrepository,
wobei das in der Sendung umfasste Funkmodul (110, R) dazu konfiguriert ist, eine oder mehrere Anforderungen zum Anschluss an ein Funknetzwerk unter Verwendung der Netzwerktypkennung zu übermitteln.

9. Verfahren nach Anspruch 8, wobei die Netzwerktypkennung eine internationale Mobilteilnehmeridentität, IMSI, ist und/oder die Versandkennung eine globale Handelsgüternummer, GTIN, eine Fahrzeugidentifikationsnummer oder eine internationale Mobilgerätekennung des Funkmoduls ist, wobei das Verfahren ferner Generieren einer weiteren Nachricht umfasst, um zu signalisieren, dass die Netzwerktypkennung nicht mehr mit der Versandkennung assoziiert ist, nachdem die Sendung ihren Bestimmungsort erreicht hat.

10. Verkehrsbehördenvorrichtung (510, 300), umfassend:
eine Netzwerkschnittstelle (310) und eine Verarbeitungseinheit (320), die dazu konfiguriert ist, eines der Verfahren nach Anspruch 8 bis 9 zum Verfolgen einer Sendung durchzuführen, die Funkmodule umfasst.

11. Einrichtung nach Anspruch 7, ferner umfassend:
ein viertes Modul (1010) zum Generieren einer Nachricht darüber, dass die Netzwerktypkennung mit der Versandkennung assoziiert ist; und
ein fünftes Modul (1020) zum Senden der Nachricht an eine Funknetzwerkvorrichtung.

12. Verfahren nach Anspruch 1, ferner umfassend:
Empfangen (S1110) einer Verfolgungsinformationsanforderung, TIR, in Bezug auf die Sendung; und
Abrufen (S1120) von Standortinformationen in Reaktion auf die TIR,
wobei die TIR mindestens eine von der Versandkennung und der mit der Versandkennung assoziierten Netzwerktypkennung umfasst.

13. Verfahren nach Anspruch 12, wobei die Standortinformationen Positions-Zeit-Paare zusammen mit einer Route zwischen einem Versandort und einem Bestimmungsort der Sendung umfassen.

14. Verfahren nach Anspruch 13, wobei die Positions-Zeit-Paare aus einer Blockchain abgerufen werden, die aus Datensätzen besteht, die jedes Mal, wenn eine Netzwerkanschlussanforderung mit der Netzwerktypkennung von einer Netzwerkvorrichtung empfangen wurde, generiert wurden, wobei die Blockchain initialisiert wurde, als die Versandkennung mit der Netzwerktypkennung am Versandort assoziiert wurde,
wobei die Blockchain mit einem Datensatz endet, der anzeigt, dass die Netzwerktypkennung nicht mehr mit der Versandkennung assoziiert ist.

15. Verfahren nach einem der Ansprüche 13 bis 14, wobei das Verfahren ferner Folgendes umfasst:
falls ein Standort in den Positions-Zeit-Paaren basierend auf netzwerkknotenbezogenen Informationen eines Netzwerkknotens, der die Netzwerkanschlussanforderung empfängt, identifiziert wird, Umwandeln der netzwerkknotenbezogenen Informationen in geografische Koordinaten.

16. Netzwerkbetreibervorrichtung nach Anspruch 6, wobei die Verarbeitungseinheit ferner zu Folgendem konfiguriert ist:
Empfangen einer Verfolgungsinformationsanforderung, TIR, in Bezug auf die Sendung; und Abrufen von Standortinformationen in Reaktion auf die TIR, wobei die TIR mindestens eine von der Versandkennung und der mit der Versandkennung assoziierten Netzwerktypkennung umfasst.

17. Netzwerkbetreibervorrichtung nach Anspruch 6, ferner umfassend:
ein erstes Modul (1210) zum Empfangen einer Verfolgungsinformationsanforderung, TIR, in Bezug auf die Sendung; und
ein zweites Modul (1220) zum Abrufen von Standortinformationen in Reaktion auf die TIR,
wobei die TIR mindestens eine von der Versandkennung und der mit der Versandkennung assoziierten Netzwerktypkennung umfasst.

## Revendications

1. Procédé (200) réalisé par un nœud de réseau (120, 130, 300, 400, 520A-D, 630) pour le suivi d'expéditions qui incluent des modules radio, le procédé comprenant :
la réception (S210) d'une demande de rattachement de réseau avec un identifiant de type de réseau, depuis un module radio (110, R) qui est inclus dans une expédition, dans lequel l'identifiant de type de réseau comprend une identité internationale d'abonné mobile, IMSI, fictive ;
la détermination (S220) si l'identifiant de type de réseau est associé à un identifiant d'expédition ; et
la génération (S230) d'un enregistrement indiquant un emplacement de l'expédition lorsque le module radio a transmis la demande de rattachement de réseau, s'il est déterminé que l'identifiant de type de réseau est associé à l'identifiant d'expédition.

2. Procédé selon la revendication 1, dans lequel l'enregistrement est inclus dans une chaîne de blocs créée lorsque l'identifiant de type de réseau a été associé à l'identifiant d'expédition, dans lequel un horodatage pour la réception de la demande de rattachement de réseau est inclus dans l'enregistrement.

3. Procédé selon la revendication 1, dans lequel l'enregistrement est stocké dans une table de hachage distribué initiée lorsque l'identifiant de type de réseau a été associé à l'identifiant d'expédition, dans lequel un horodatage pour la réception de la demande de rattachement de réseau est inclus dans l'enregistrement.

4. Procédé selon l'une quelconque des revendications 1 à 3, dans lequel l'emplacement est identifié sur la base d'informations relatives au nœud de réseau, et le procédé comprend en outre la conversion des informations relatives au nœud de réseau en coordonnées géographiques.

5. Procédé selon l'une quelconque des revendications 1 à 4, comprenant en outre :
le rejet de la demande de rattachement.

6. Dispositif d'opérateur de réseau (120, 130, 300, 400, 520A-D, 630), comprenant :
une interface de réseau (310) et une unité de traitement (320) configurée pour réaliser l'un quelconque des procédés selon les revendications 1 à 5 pour le suivi d'une expédition incluant un module radio (110, R).

7. Appareil (400) pour le suivi d'expéditions qui incluent des modules radio, l'appareil comprenant :
un premier module (410) pour la réception d'une demande de rattachement de réseau avec un identifiant de type de réseau, depuis un module radio qui est inclus dans l'expédition, dans lequel l'identifiant de type de réseau comprend une identité internationale d'abonné mobile, IMSI, fictive ;
un deuxième module (420) pour la détermination si l'identifiant de type de réseau est associé à un identifiant d'expédition de l'expédition ; et
un troisième module (430) pour la génération d'un enregistrement incluant un emplacement de l'expédition lorsque le module radio a transmis la demande de rattachement de réseau, s'il est déterminé que l'identifiant de type de réseau est associé à l'identifiant d'expédition.

8. Procédé selon la revendication 1, comprenant en outre :
la génération (S910) d'un message relatif à l'identifiant de type de réseau qui est associé à l'identifiant d'expédition ; et
la transmission (S920) du message à un référentiel d'informations de suivi,
dans lequel le module radio (110, R) inclus dans l'expédition est configuré pour soumettre une ou plusieurs demandes de rattachement à un réseau radio à l'aide de l'identifiant de type de réseau.

9. Procédé selon la revendication 8, dans lequel l'identifiant de type de réseau est une identité internationale d'abonné mobile, IMSI, et/ou l'identifiant d'expédition inclut un numéro d'article commercial mondial, GTIN, un numéro d'identification de véhicule ou une identité internationale d'équipement mobile du module radio, le procédé comprenant en outre la génération d'un autre message pour signaler que l'identifiant de type de réseau n'est plus associé à l'identifiant d'expédition après que l'expédition a atteint sa destination.

10. Dispositif d'administration de transport (510, 300), comprenant :
une interface de réseau (310) et une unité de traitement (320) configurée pour réaliser l'un quelconque des procédés selon les revendications 8 et 9 pour le suivi d'expéditions qui incluent des modules radio.

11. Appareil selon la revendication 7, comprenant en outre :
un quatrième module (1010) pour la génération d'un message relatif à l'identifiant de type de réseau qui est associé à l'identifiant d'expédition ; et
un cinquième module (1020) pour transmettre le message à un dispositif de réseau radio.

12. Procédé selon la revendication 1, comprenant en outre :
la réception (S1110) d'une demande d'informations de suivi, TIR, relative à l'expédition ; et
la récupération (S1120) d'informations d'emplacement en réponse à la TIR,
dans lequel la TIR inclut au moins l'un parmi l'identifiant d'expédition et l'identifiant de type de réseau associé à l'identifiant d'expédition.

13. Procédé selon la revendication 12, dans lequel les informations d'emplacement incluent des paires position-temps le long d'un itinéraire entre un emplacement d'expédition et une destination de l'expédition.

14. Procédé selon la revendication 13, dans lequel les paires position-temps sont récupérées à partir d'une chaîne de blocs constituée d'enregistrements générés chaque fois qu'une demande de rattachement de réseau avec l'identifiant de type de réseau a été reçue par un dispositif de réseau, dans lequel la chaîne de blocs a été initialisée lorsque l'identifiant d'expédition a été associé à l'identifiant de type de réseau à l'emplacement d'expédition,
dans lequel la chaîne de blocs se termine par un enregistrement indiquant que l'identifiant de type de réseau n'est plus associé à l'identifiant d'expédition.

15. Procédé selon l'une quelconque des revendications 13 et 14, le procédé comprenant en outre :
si un emplacement dans les paires position-temps est identifié sur la base d'informations relatives au nœud de réseau d'un nœud de réseau recevant la demande de rattachement de réseau, la conversion d'informations relatives au nœud de réseau en coordonnées géographiques.

16. Dispositif d'opérateur de réseau selon la revendication 6, dans lequel l'unité de traitement est en outre configurée pour :
recevoir une demande d'informations de suivi, TIR, relative à l'expédition ; et récupérer des informations d'emplacement en réponse à la TIR, dans lequel la TIR inclut au moins l'un parmi l'identifiant d'expédition et l'identifiant de type de réseau associé à l'identifiant d'expédition.

17. Dispositif d'opérateur de réseau selon la revendication 6, comprenant en outre :
un premier module (1210) pour la réception d'une demande d'informations de suivi, TIR, relative à l'expédition ; et
un deuxième module (1220) pour la récupération d'informations d'emplacement en réponse à la TIR,
dans lequel la TIR inclut au moins l'un parmi l'identifiant d'expédition et l'identifiant de type de réseau associé à l'identifiant d'expédition.
